# EUROPEAN PATENT APPLICATION

(11) **EP 3 095 849 A1**
(43) Date of publication of application: **23.11.2016**
(21) Application number: 16001159.9
(22) Date of filing: 20.05.2016
(51) Int. Cl.: C12G 3/04

(54) **METHOD FOR PREPARATION OF SPARKLING WINE COCKTAILS**

(30) Priority: 20.05.2015 ES 201500385
(71) Applicant: Francesc Xavier Carretero Pena, 08750 Barcelone (ES)
(72) Inventor: Francesc Xavier Carretero Pena, 08750 Barcelone (ES)

(57) **Abstract**

The present invention refers to the food industry. More specifically, the present invention refers to a method for preparation of cocktails which are based on sparkling wine, such as Cava, whereby it is possible to obtain cocktails at industrial scale with an appearance of coloured pearl, and when putting the bottle in motion simulates ocean waves, which is extremely attractive for consumption, specially in night clubs and discotheques. In addition, with the method of the present invention properties of the based sparkling wine are kept in the prepared cocktail.

## Description

The present invention refers to the food industry. More specifically, the present invention refers to a method for preparation of cocktails which are based on sparkling wine, such as Cava, whereby it is possible to obtain cocktails at industrial scale with an appearance of coloured pearl, and when putting the bottle in motion it simulates ocean waves, which is extremely attractive for consumption, specially in night clubs and discotheques. In addition, with the method of the present invention properties of the based sparkling wine in the prepared cocktail are kept.

Manufacturing process of sparkling wines is a complex process. The grapes are harvested, which can be done by hand or by machine, with the required care and speed in transport. Then, grapes are pressed and, for example, in case of producing Cava, only the free run juice obtained from the first press fractions is used, as this is the grape juice with the highest quality. This grape juice is chilled and clarified, which is an operation which consists of separating solid particles (pulp) that may have been transferred to the free run juice.

The grape juice obtained is transformed into wine in a first alcoholic fermentation, which takes places at a controlled temperature between 15°C and 18°C for 20 to 25 days. Once the fraction of the must is clear, selected yeasts are added to begin the fermentation. During this process, the yeasts transform natural sugar contained in the grapes into alcohol and carbon dioxide obtaining mono varietal base cava wines.

Then, the oenologist is responsible for selecting and blending the base wines obtained after the fermentation process in a combination of technical expertise, experience and art. At this time, the oenologist must take into account several parameters depending on the type of sparkling wine to be made, such as fruity flavours, balance in the mouth, body and structure, acidity to go through a long aging, etc.

Clarification consists in getting rid of murky aspect caused by the presence of particles in suspension proceeding from the fermentation in order to obtain a completely clear wine free of any impurities. Prior to tirage, the wine is cooled in order to precipitate the tartaric acid in the form of salts.

In order to preserve the wine and maintain its qualities throughout time, it is cold stabilised prior to the second fermentation.

The tirage is an operation that consist in filling up the bottles with the base wine and the so-called "tirage liquor", made up of yeasts and sugar. This will cause a second fermentation that takes place inside the bottle. The bottles are closed and they are taken down to the darkness of the caves (or underground galleries), where they will be stacked horizontally. This is the stage prior to the second fermentation in the same bottle that will reach the final consumer. Upon completion of the second fermentation, the yeasts die and settle at the bottom of the bottle. This is the moment when aging begins.

Aging is the time of contact of the yeasts with the sparkling wine. The minimum is 9 months, though there is no maximum time. An interesting phenomenon which takes place after 15 months of aging is called autolysis, whereby the yeasts cells conforming the lees begin to contribute components to the sparkling wine, providing tertiary aromas such as dried fruits, coast, bakery, toffee, caramel, etc. This process provides more complexity to the sparkling wine and it is a characteristic of reserve and grand reserve sparkling wines.

Then, the step of riddling is carried out, which consist of moving the sediments (dead yeast cells) caused by the second fermentation to the neck of the bottle. Riddling can either be done by hand or by machine. A successive rotational movement, rattle and tilt is done until the yeasts reach the neck of the bottle and can easily be removed at a further disgorging step.

Disgorging consists in getting rid of the dead yeasts cells once the second fermentation is finished. Disgorging can be done either manually or mechanically. Any of the two chosen ways ensures that no sediments are left in the bottle and the sparkling wine is ready if required for the addition of the so-called "expedition liquor".

After disgorging, the expedition liquor is added. The expedition liquor can comprise sugars, base wines and other house spirits, for example wines aged in barrels, which provide a particular bouquet to the sparkling wine. In some wineries the expedition liquor is and will continue to be one of the best kept secrets. Once the bottles have been topped up with the expedition liquor, they are closed with a final cork, a wire cage, a capsule, labels and a quality control stamp and they are ready for dispatch.

Usually, cocktails mainly consisting of sparkling wine must be prepared *in situ* in the same cup or glass in which it will be consumed. Industrial preparation of cocktails based on sparkling wine has the drawback that carbonic gas produced in fermentations during the process for obtaining sparkling wine could be partially or totally released from said sparkling wine depending on additives to be added to the same, and also depending on other parameters such as temperature. This fact makes the prepared cocktail could loose both organoleptic properties and characteristic bouquet of sparkling wines.

The present inventor has developed a method at industrial scale for preparing cocktails based on sparkling wines. With the method of the present invention a specific mixture of additives and food colorants is made, which makes said cocktail having a surprisingly visual pearlescent effect, simulating ocean waves, which is extremely attractive for consumption, specially in closed premises with artificial light. In addition, cocktails prepared using the method of the present invention keep all the properties of the based sparkling wine.

Therefore, the present invention provides a method for preparation of sparkling wine cocktails comprising the steps of:
a) taking a volume between 700 and 800 ml of based sparkling wine;
b) adjusting temperature of said based sparkling wine between 2°C and 20°C;
c) perform a first colouring step with a first food colorant using an amount of said first food colorant between 0.002 mg and 100 mg;
d) perform a second colouring step with a second food colorant selected from titanium dioxide (code E-171) or gold (code E-175), or a mixture thereof, using an amount of said second food colorant between 0.5 and 500 mg;
e) filling, closing, capsulation and labelling of bottles.

The based sparkling wine of step a) can be obtained from a production step of a wine with sparkling fermentation, also known as gasified wines of endogenous origin, for example, from the disgorging step mentioned above. Furthermore, said sparkling wine of step a) can be a quiet wine with exogenous gasification, to which more carbonic gas is added in addition to the gas of endogenous origin. In the first case, the starting material is moved to a new bottle and the method of the present invention is followed. In the second case, it is likely that it will be necessary to add a process step of adjusting the alcohol content by dilution, and it will be necessary to add a gasification step, i.e., injection of carbon dioxide to the based sparkling wine.

Preferably, the based sparkling wine is Cava.

Food colorants used in step c) of the method of the present invention can be the food colorants mentioned in the European Parliament and Council Directive 94/36/CE, dated June 30th, 1994, such as for example, Green S (code E-142), Patent Blue V (code E-131), Brilliant Blue FCF (code E-133), Orange Yellow S (code E-110), black, Beetroot Red (code E-162), or mixtures thereof.

Furthermore, depending on the cocktail to be prepared, the method of the present invention can optionally comprise steps selected from sweetening, flavouring, adding other spirituous liquors, etc.

For example, the sweetening step can be carried out using liquid sugar or using any sweetener liquor used in the food industry.

The skilled person knows what kind of flavours can be added to the cocktail prepared according to the method of the present invention. For example, one or more flavours mentioned in Article 1.2(a) of the Council Directive 88/388/CE can be added.

In addition, any of the spirit drinks complying with the Regulation (EC) No. 110/2008 of the European Parliament and of the Council of 15 January 2008, such as, for example, rum, whiskey, brandy, vodka, gin, anise, creamed Cassis, etc.

It is obvious to the skilled person that volume of the based sparkling wine mentioned in the method of the present invention may vary, i.e., if preparation of a greater or lesser volume is desired, proportions mentioned in the method of the present invention should be kept, to achieve the desired technical effect in the prepared cocktail.

The present invention is described below based on examples which are not a limitation of the present invention, and based on the following figures, in which:

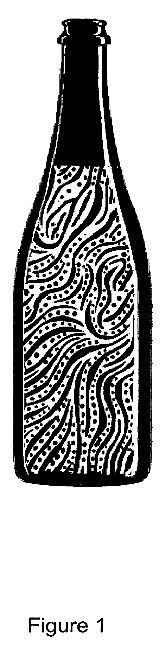

Figure 1 is a bottle of the type containing sparkling wines such as Cava or Champagne, containing a cocktail prepared according to the method of the present invention. When the bottle is shaken, different movement effects can be observed inside the bottle, such as an effect similar to ocean waves.

### EXAMPLES

### Example 1. Preparation of a blue pearl cocktail according to the method of the present invention.

In this example a Cava cocktail with a blue pearl colour and with a Curaçao liquor flavour was prepared. 8 mg of Brilliant Blue FCF (E-133) are added to 750 ml of Cava at room temperature. Then, 70 mg of food grade titanium dioxide (E-171) were added and further 18 ml of Curaçao liquor were also added. Once the bottle is closed, the mixture was stirred to homogeneity. A cocktail with blue pearl colour was obtained, and when the bottle containing the same is put in motion it simulates ocean wave movement. In addition, the prepared cocktail keeps the Cava bouquet with a slight taste to Curaçao liquor.

### Example 2. Preparation of a green pearl cocktail using the method of the present invention.

In this example a Cava cocktail with a green pearl colour and with a mint flavour was prepared. 8 mg of Patent Blue V (E-131) were added to 750 ml of Cava at room temperature. Then, 70 mg of food grade titanium dioxide (E-171) were added and further 40 ml of mint flavoured rum were also added. Once the bottle is closed, the mixture was stirred to homogeneity. A cocktail with green pearl colour was obtained. In addition, the prepared cocktail keeps the Cava bouquet with a slight taste to rum with mint.

### Example 3. Preparation of a red pearl cocktail using the method of the present invention.

16 mg of Beetroot Red (E-162) were added to 800 ml of Cava at room temperature. Then, 70 mg of food grade titanium dioxide (E-171) were added and further 20 ml of blackberry liquor were also added. Once the bottle is closed, the mixture was stirred to homogeneity. A cocktail with red pearl colour was obtained. In addition, the prepared cocktail keeps the Cava bouquet with a slight taste to blackberry.

### Example 4. Preparation of a black pearl cocktail using the method of the present invention.

40 mg of a mixture of colorants (E-102 + E-110 + E-124 + E-131 + E-151) were added to 700 ml of gasified quiet wine at room temperature. Then, 70 mg of food grade gold (E-175) were added and further 40 ml of Cassis liquor. Once the bottle is closed, the mixture was stirred to homogeneity. A cocktail with a golden black colour was obtained. In addition, the prepared cocktail keeps the Cava bouquet with a slight taste to Cassis.

## Claims

1. Method for producing sparkling wine cocktails, **characterized in that** it comprises the steps of:
a) taking a volume between 700 and 800 ml of based sparkling wine;
b) adjusting temperature of said based sparkling wine between 2°C and 20°C;
c) perform a first colouring step with a first food colorant using an amount of said first food colorant between 0.002 mg and 100 mg;
d) perform a second colouring step with a second food colorant selected from titanium dioxide (code E-171) or gold (code E-175), or a mixture thereof, using an amount of said second food colorant between 0.5 and 500 mg;
e) filling, closing, capsulation and labelling of bottles.

2. Method, according to claim 1, **characterized in that** the based sparkling wine is a gasified wine of endogenous origin.

3. Method, according to claim 2, **characterized in that** the based sparkling wine is a Cava.

4. Method, according to claim 1, **characterized in that** the based sparkling wine is a wine with exogenous gasification.

5. Method, according to claim 4, **characterized in that** the method comprises a further step of injection of carbon dioxide.

6. Method, according to any of the preceding claims, **characterized in that** the food colorants of step c) is a food colorants mentioned in the European Parliament and Council Directive 94/36/CE, dated June 30th, 1994, such as for example, Green S (code E-142), Patent Blue V (code E-131), Brilliant Blue FCF (code E-133), Orange Yellow S (code E-110), black, Beetroot Red (code E-162), or mixtures thereof.

7. Method, according to any of the preceding claims, **characterized in that** the method comprise further steps selected from sweetening, flavouring, adding other spirituous liquors.

8. Method, according to any of the preceding claims, **characterized in that** flavours are those mentioned in Article 1.2(a) of the Council Directive 88/388/CE.
